# FASCICULE DE BREVET EUROPEEN

(11) **EP 1 392 737 B1**
(45) Date de publication et mention de la délivrance du brevet: **04.07.2007**
(21) Numéro de dépôt: 02730392.4
(22) Date de dépôt: 03.05.2002
(51) Int. Cl.: C08F 8/00, C08F 2/38, C08C 19/30

(54) **PROCEDE DE REDUCTION RADICALAIRE DE FONCTIONS DITHIOCARBONYLEES OU DITHIOPHOSPHORYLEES PORTEES PAR UN POLYMERE**
VERFAHREN ZUR RADIKALEN REDUZIERUNG VON DITHIOCARBONYL- UND DITHIOPHOSPHORYLFUNKTIONEN VON POLYMEREN
METHOD FOR FREE RADICAL REDUCTION OF DITHIOCARBONYLATED OR DITHIOPHOSPHORYLATED FUNCTIONS BORNE BY A POLYMER

(30) Priorité: 04.05.2001 US 288844 P; 04.05.2001 US 288846 P; 05.09.2001 FR 0111496
(43) Date de publication de la demande: 03.03.2004
(73) Titulaire: RHODIA CHIMIE, 92512 Boulogne-Billancourt Cedex (FR)
(72) Inventeur: WILCZEWSKA, Zofia, Agnieszka, PL-15-078 Bialystok (PL); DESTARAC, Mathias, F-75005 Paris (FR); ZARD, Samir, F-91190 Gif-Sur-Yvette (FR); KALAI, Chakib, F-75014 Paris (FR); MIGNANI, Gérard, F-69008 Lyon (FR); ADAM, Hervé, Princeton, NJ 08540 (US)
(74) Mandataire: Bernasconi, Jean Raymond
(86) Numéro de dépôt international: PCT/FR2002/001537
(87) Numéro de publication internationale: WO 2002/090397

(56) Documents cités:
- EP-A- 0 084 882
- EP-A- 0 189 672
- EP-A- 0 243 124
- EP-A- 0 849 282
- WO-A-00/20465
- WO-A-01/42312
- FR-A- 2 794 464

## Description

La présente invention a trait à un procédé de réduction radicalaire de fonctions dithiocarbonylées ou dithiophosphorylées portées par un polymère issu d'une polymérisation radicalaire vivante, donnant en particulier accès à des polymères à architecture contrôlée, et en particulier à des copolymères séquencés, ne présentant pas de telles fonctions dithiocarbonylées ou dithiophosphorylées.

Dans la présente description, en l'absence d'indications contraires, le terme "polymère" sera utilisé pour désigner, au sens large, aussi bien des homopolymères que des copolymères. Les polymères peuvent correspondre à des polymères (homopolymères) ou des copolymères (statistiques, diblocs, triblocs, greffés ou en étoile, ou hyperramifiés)

De façon plus spécifique, au sens de l'invention, on entend par "polymère à architecture contrôlée" un polymère à base de deux ou plusieurs monomères présentant un agencement contrôlé de ces différentes unités monomères le constituant.

Par "polymère séquencé" (ou "copolymère à blocs"), on entend designer, selon l'invention, un copolymère comprenant au moins deux enchaînements (blocs) successifs d'unités monomères de constitutions chimiques différentes. Chacun des blocs présents peut être constitué d'un homopolymère ou d'un copolymère obtenu à partir d'un mélange de monomères éthyléniquement insaturés. Dans le second cas, le bloc peut notamment être un copolymère statistique. Les copolymères à blocs au sens de l'invention peuvent ainsi comprendre deux blocs constitués, chacun, de copolymères statistiques. Dans ce cas, les monomères éthyléniquement insaturés sont tels que les blocs obtenus sont de natures différentes. Par "blocs de natures différentes", on entend soit des blocs constitués de monomères de types différents, soit des blocs constitués de monomères de même type mais dans des quantités différentes.

Les polymères à architecture contrôlée, tels que les polymères séquencés, sont habituellement préparés par polymérisation ionique. Ce type de polymérisation présente toutefois l'inconvénient de ne permettre la polymérisation que de certains types de monomères apolaires, tels que le styrène et le butadiène. De plus, la polymérisation ionique requiert généralement des contraintes de mise en oeuvre sévères, et notamment un milieu réactionnel particulièrement exempt d'impuretés et des températures de mises en oeuvre souvent inférieures à l'ambiante, de manière à minimiser l'apparition de réactions parasites.

De telles contraintes n'existent pas dans le cas de la polymérisation radicalaire, qui présente en outre l'avantage de pouvoir être mise en oeuvre dans le cadre de la polymérisation d'autres type de monomères. De ce fait, on s'est rapidement intéressé à la polymérisation radicalaire dans le cadre de la préparation de polymères à architecture contrôlée du type des copolymères séquencés.

Cependant, lors d'une réaction de polymérisation radicalaire conventionnelle, les macroradicaux en croissance ont généralement une réactivité non-sélective et les chaînes se terminent généralement de façon irréversible par couplage ou dismutation. Par conséquent, en polymérisation radicalaire, il est généralement très difficile de contrôler la structure des chaînes réalisées et il est en particulier extrêmement difficile de réaliser des polymères fonctionnalisés en bout de chaîne, ce qui limite, dans le cas le plus général, les possibilités d'obtenir des copolymères séquencés.

De façon à surmonter ce type de difficultés, on a récemment développé des procédés de polymérisation radicalaire particuliers, dans lesquels les chaînes polymères en croissance ainsi que les chaînes réalisées in fine sont fonctionnalisées par des groupements terminaux susceptibles de pouvoir être réactivés sous forme de radicaux libres grâce à des réactions de terminaisons ou de transferts réversibles.

Ce type de polymérisation radicalaire spécifique est généralement désigné par le terme de polymérisation radicalaire "contrôlée" ou "vivante". Ces dénominations proviennent du fait que la présence des groupements terminaux réactivables décrits ci-dessus induit l'existence d'équilibres entre des espèces fonctionnalisées (dites espèces "dormantes") et des espèces actives (radicaux libres), ce qui permet à la fois de maîtriser la croissance des chaînes polymères (obtention de distributions des masses resserrées et contrôle de la masse moléculaire moyenne, notamment en jouant sur le rapport molaire monomère /précurseur de chaînes actives) et d'obtenir des polymères fonctionnalisés, dits "vivants", c'est à dire capables d'être mis en oeuvre à titre d'espèces réactivables dans des réactions de polymérisations radicalaires subséquentes, ce qui s'avère particulièrement intéressant dans le cadre de la préparation de copolymères séquencés. Pour plus de détails à ce sujet, on pourra notamment se référer à K. Matyjaszewski, Ed. Controlled Radical Polymerization, ACS Symposium Series 685, American Chemical Society Washington, DC, 1998 et ACS Symposium Series 768, 2001.

La polymérisation radicalaire vivante (ou contrôlée) présente idéalement les aspects distinctifs suivants :
1. un nombre de chaînes fixe pendant toute la durée de la réaction;
2. une vitesse de croissance très resserrée autour d'une valeur moyenne, pour toutes les chaînes polymère en croissance, et avantageusement une vitesse de croissance identique pour toutes les chaînes, ce qui se traduit par:
   - une augmentation des masses moléculaires avec la conversion, avantageusement de façon linéaire; et
   - une distribution des masses resserrée ;
3. une possibilité de contrôle de la masse moléculaire moyenne par le rapport molaire monomère / précurseur de chaîne;

Dans ce cadre, on a en particulier développé de multiples procédés de polymérisations contrôlées (vivantes), dits "par transfert réversible de chaînes", mettant en oeuvre des mécanismes d'addition-fragmentation. Cette synthèse particulière de polymère est réalisée en effectuant une polymérisation radicalaire en présence d'agents de transfert réversible et d'une source de radicaux libres, généralement amorcée thermiquement, ce qui conduit à l'obtention de polymères fonctionnalisés. Ce type de polymérisation est une des technologies les plus appropriées pour synthétiser des copolymères à blocs par voie radicalaire.

Pour plus de renseignement concernant ce type de polymérisations par transfert réversible par addition-fragmentation, on pourra se reporter par exemple aux demandes de brevets WO 98/01478 ou WO 99/35178, qui décrivent l'utilisation d'agents de transfert réversible de type dithioesters de type RS(C=S)R' pour la synthèse de copolymères à architecture contrôlée. La mise en oeuvre d'agents de transfert dithiocarbamates de type RS(C=S)NR'R" pour réaliser le contrôle de polymérisations radicalaires a également été décrit dans les demandes de brevets WO 99/35177 ou WO 99/31144. Toujours en ce qui concerne ce type de polymérisation par transfert réversible, un procédé de préparation par polymérisation radicalaire sous activation thermique de copolymères hybrides silicones/organiques a également été décrit dans la demande de brevet français FR 00/09722 déposée par la Demanderesse le 25 juillet 2000. Ces copolymères hybrides sont constitués d'un squelette silicone et porteurs de groupements organiques, ils sont préparés à partir d'un précurseur silicone, d'au moins un monomère éthyléniquement insaturé organique et d'un initiateur de polymérisation radicalaire. Dans le cadre de la polymérisation radicalaire vivante par amorçage thermique, les xanthates de formule générale RSC(=S)OR', décrits par exemple dans les demandes de brevets WO 98/58974, WO 00/75207 et WO 01/042312 sont des agents de transfert réversible particulièrement intéressants, qui permettent de contrôler la polymérisation radicalaire de bon nombre de monomères tels que les monomères styréniques, acryliques, acrylamides, esters vinyliques et diéniques.

Quel que soit le mode exact de mise en oeuvre d'une réaction de polymérisation radicalaire vivante, les chaînes polymères obtenues à l'issue d'une telle réaction sont le plus souvent fonctionnalisées en bout de chaîne. Cette fonctionnalisation leur confère généralement un caractère "vivant" effectif, c'est à dire qu'elles peuvent jouer le rôle d'espèces réactivables dans des réactions de polymérisations ultérieures, ce qui s'avère particulièrement intéressant pour réaliser la synthèse de polymères à architecture contrôlée, et en particulier de copolymères séquencés. Toutefois, en règle générale, les fonctions réactivables présentes en bout de chaînes sur les polymères obtenus à l'issu d'une polymérisation radicalaire vivante sont également fragiles, et elles sont par exemple souvent hydrolysables en milieu basique. Ces réactions d'hydrolyse sont susceptibles de libérer des sous-produits de bas poids moléculaires, malodorants et/ou toxiques pour l'environnement et l'être humain, tels que par exemple le sulfure de carbonyle dans le cas de polymères présentant des fonctions réactivables de type xanthate.

Un des buts de la présente invention est de proposer un procédé permettant de retirer les fonctions réactives portées par certains polymères issus d'une réaction de polymérisation vivante.

L'invention a également pour but de proposer un procédé de préparation de polymères possédant les avantages présentés par les polymères issus d'une réaction de polymérisation radicalaire vivante, à savoir, en particulier, une masse moléculaire moyenne en nombre Mₙ bien contrôlée et une distribution de masses resserrée, mais ne présentant pas de fonctions réactivables en bout de chaînes susceptibles de mener aux inconvénients précités.

Ces buts, et d'autres qui apparaîtront au vu de la description, sont atteints par la présente invention, qui a pour objet un procédé de préparation d'un polymère, qui comprend une étape consistant à mettre en contact :
(A) au moins un polymère organique vivant présentant en bout de chaîne au moins une fonction réactivable dithiocarbonylée ou dithiophosphorylée ;
(B) au moins une source de radicaux libres ; et
(C) au moins un composé organique porteur d'un atome d'hydrogène labile.

Cette étape permet plus particulièrement de procéder à une substitution de la fonction dithiocarbonylée ou dithiophosphorylée présente sur ledit polymère organique vivant par un atome d'hydrogène.

Par "polymère organique vivant", on entend, au sens de la présente description, tout polymère au sens de l'invention, au moins partiellement à base d'unités monomères organiques, et susceptible d'être obtenu selon un procédé de polymérisation radicalaire vivante.

Les polymères organiques vivants qui sont mis en oeuvre dans le procédé de l'invention peuvent avantageusement être des copolymères à architecture contrôlée, et il peut ainsi s'agir par exemple de copolymères séquencés. Quelle que soit leur structure exacte, ces polymères organiques vivants présentent spécifiquement, en bout de chaîne, au moins une fonction réactivable dithiocarbonylée ou dithiophosphorylée, c'est à dire une fonction respectivement de type -S(C=S)-R ou -S(P=S)-R, où R désigne un groupement organique quelconque.

Ainsi, la fonction réactivable dithiocarbonylée ou dithiophosphorylée présente en bout de chaîne sur le polymère (A) mis en oeuvre dans le procédé de l'invention peut avantageusement être une fonction -S(C=S)-R ou -S(P=S)-R, où R désigne :
(i) un groupement alkyle, halogénoalkyle, perfluoroalkyle, alcényle ou alcynyle, acyle, aryle, arylalkyle, arylalcényle, arylalcynyle, ou bien un cycle carboné ou un hétérocycle, ou bien encore une chaîne polymère ;
(ii) un radical -OR^{a}, dans lequel R^{a} désigne un groupement choisi parmi :
   - un groupement alkyle, halogénoalkyle, perfluoroalkyle, alcényle, alcynyle, acyle, aryle, arylalkyle, arylalcényle, arylalcynyle, ou bien un cycle carboné ou un hétérocycle, ou bien une chaîne polymère ;
   - un groupement -CR^{b}R^{c}PO(OR^{d})(OR^{e}), dans lequel :
      - R^{b} et R^{c} représentent chacun, indépendamment l'un de l'autre, un atome d'hydrogène, un atome d'halogène, un groupement perfluoroalkyle, un cycle carboné ou un hétérocycle, ou bien encore un groupement -NO₂, -NCO, -CN, ou un groupement choisi parmi les groupements de type -R^{f}, -SO₃R^{f}, -OR^{f}, -SR^{f}, -NR^{f}R^{g}, -OOCR^{f}, -CONR^{f}R^{g}, ou -SO₃R^{f}, dans lesquels R^{f} et R^{g} désignent chacun, de façon indépendante, un groupement alkyle, alcényle, alcynyle, aryle, aryle, arylalkyle, arylalcényle, ou arylalcynyle ;
         ou bien R^{b} et R^{c} forment ensemble avec le carbone auquel il sont rattachés,un groupement C=O ou C=S, ou bien un cycle hydrocarboné ou un hétérocycle ; et
      - R^{d} et R^{e} représentent chacun, indépendamment l'un de l'autre, un radical répondant à l'une des définitions données ci-dessus pour le groupement R^{f};
         ou bien R^{d} et R^{e} forment ensemble une chaîne hydrocarbonée comportant de 2 à 4 atome de carbone, éventuellement interrompue par un groupement -O-, -S-, ou - NR^{h}-, où R^{h} répond à l'une des définitions données ci-dessus pour le groupement R^{f};
(iii) un groupement -NRⁱR^{j}, où :
   - Rⁱ et R^{j} représentent indépendamment l'un de l'autre un radical choisi parmi un groupement alkyle, halogénoalkyle, alcényle, alcynyle, acyle, ester, aryle, arylalkyle, arylalcényle, arylalcynyle, ou un cycle carboné; ou
   - Rⁱ et R^{j} forment ensemble une chaîne hydrocarbonée comportant de 2 à 4 atome de carbone, éventuellement interrompue par un groupement -O-, -S-, ou -NR^{H}-, où R^{H} répond à l'une des définitions données ci-dessus pour le groupement R^{f}, ladite chaîne hydrocarbonée formant avantageusement un cycle à 5 chaînons avec l'azote auquel sont rattachés Rⁱ et R^{j},
   les radicaux Rⁱ et R^{j} induisant de préférence un effet électroattracteur ou un effet de délocalisation vis à vis de la densité électronique de l'atome d'azote auquel ils sont liés.

Dans l'ensemble de la présente description, on entend couvrir par le terme de groupement "alkyle" un radical hydrocarboné saturé, linéaire ou ramifié, pouvant éventuellement inclure un ou plusieurs cycle(s) aliphatique(s) saturé(s). Au sens de l'invention, les groupes alkyles peuvent présenter jusqu'à 25 atomes de carbone, et ils contiennent de préférence de 1 à 12 atomes de carbone, et avantageusement de 1 à 6 atomes de carbone.

De façon particulière, un groupe alkyle peut également désigner, au sens de l'invention, un groupe cycloalkyle, c'est-à-dire un radical hydrocarboné saturé cyclique, présentant de préférence de 3 à 10 atomes de carbone.

Un groupement "alcoxy" désigne quant à lui, au sens de l'invention, un radical -OAlk, où Alk désigne un groupement alkyle tel que défini ci-dessus.

Par groupement "halogénoalkyle" au sens de l'invention, on entend un radical alkyle tel que défini précédemment et substitué par au moins un atome d'halogène, où le terme "atome d'halogène" désigne ici, comme dans l'ensemble de la description, un atome de fluor, de chlore, de brome ou d'iode, de préférence un atome de fluor ou de chlore, et avantageusement un atome de fluor. Les groupements "halogénoalkyle" de l'invention peuvent ainsi être par exemple des groupements "perfluoroalkyle", c'est à dire, au sens de l'invention, des groupements répondant à la formule -CH₂CₙF₂ₙ₊₁, où n représente un entier allant de 1 à 20.

Par ailleurs, un groupement "alcényle", au sens où il est employé dans la présente description, désigne un radical hydrocarboné insaturé, linéaire ou ramifié, présentant au moins une double liaison C=C. Les groupes alcényles de l'invention peuvent présenter jusqu'à 25 atomes de carbone et comprennent de préférence de 2 à 12 atomes de carbone, et avantageusement de 2 à 6 atomes de carbone.

De même, on entend par groupe "alcynyle" un radical hydrocarboné insaturé, linéaire ou ramifié et présentant au moins une triple liaison C≡C. Les groupes alcynyles de l'invention présentent généralement de 2 à 25 atomes de carbone, et ils comprennent de préférence de 2 à 15 atomes de carbone, et avantageusement de 2 à 6 atomes de carbone.

Un groupement "acyle" désigne quant à lui, au sens de l'invention, un groupement de formule -C(=O)-B, où B désigne une chaîne hydrocarbonée linéaire ou ramifiée, saturée ou insaturée, et comportant de 1 à 25 atomes de carbone, et qui peut notamment être un groupe alkyle, alcényle ou alcynyle tels que définis ci-dessus.

Par groupement "ester" au sens de l'invention, on entend un groupement -C(=O)-OB, où B désigne une chaîne hydrocarbonée linéaire ou ramifiée, saturée ou insaturée, et comportant de 1 à 25 atomes de carbone, et qui peut notamment être un groupe alkyle, alcényle ou alcynyle tels que définis ci-dessus.

Au sens de l'invention, un radical de type "cycle carboné" désigne un groupement cyclique saturé, insaturé ou aromatique, notamment de type cycloalkyle, cycloalcényle ou cycloalcynyle, éventuellement substitué, et comportant de 3 à 20 atomes de carbone. Un radical de type "hétérocycle" désigne quant à lui un tel cycle carboné interrompu par au moins un hétéroatome choisi par exemple parmi N, O ou S.

Un groupement "aryle" désigne quant à lui, au sens de l'invention, un groupe aromatique mono- ou polycyclique possédant généralement de 5 à 20 atomes de carbone, et de préférence de 6 à 10 atomes de carbone. Ainsi, il peut par exemple s'agir d'un groupe phényle, ou encore 1- ou 2- naphtyle. Selon une variante particulière un groupe "aryle" au sens de l'invention peut intégrer un ou plusieurs hétéroatomes tels que le soufre, l'oxygène, ou l'azote. Dans ce cas particulier, le groupe "aryle" au sens de l'invention désigne un groupement hétéroaromatique mono- ou polycyclique.

Les groupes "arylalkyles", "aralcényles" et "aralcynyles" au sens de l'invention sont respectivement des chaînes alkyles, alcényles et alcynyles substituées par un groupement aryle tel que défini ci-dessus. En d'autres termes, les groupes "arylalkyles", "aralcényles" et "aralcynyles" au sens de l'invention sont respectivement des groupements de type Ar-Ra-, dans lesquels Ar- représente un groupement aryle et où les groupes de type -Ra- représentent respectivement une chaîne alkylène, alcénylène, ou alcynylène.

Les différents radicaux peuvent éventuellement être interrompus par un ou plusieurs hétéroatomes choisis notamment parmi O, S, et N, Si, ou par des groupes -(C=O)-, -(C=S)-, -SO₂-, -SO-, ou amines secondaires ou tertiaires, et ils peuvent être substitués par tout type de groupements non susceptible d'interférer avec la réaction de polymérisation ou de mener à des réactions parasites entre les composés en présence, et notamment par un ou plusieurs groupements identiques ou différents choisis parmi un atome d'halogène, un groupement silylé, un groupement -OH, alcoxy, -SH, thioalcoxy, -NH₂, mono- ou di-alkylamino, -CN, -COOH, ester, amine, ou perfluoroalkyle, lesdits substituants pouvant éventuellement être interrompus par des hétéroatomes. Il est des compétences de l'homme du métier de choisir la nature des différents groupements et substituants présents dans les composés mis en oeuvre pour éviter toute réaction secondaire indésirable.

De préférence, le polymère organique vivant (A) mis en oeuvre dans le procédé de l'invention est un polymère issu d'un procédé mettant en oeuvre une polymérisation radicalaire vivante utilisant des agent de transfert réversible par addition-fragmentation, de type dithioester, xanthate, dithiocarbamate, thioether-thione, trithiocarbonate ou dithiophosphoroester, et qui présente à au moins une extrémité de sa chaîne une partie réactivable dithiocarbonylée ou dithiophosphorylée provenant de ces agents de transfert réversible.

Les polymères organiques vivants (A) utilisés dans le procédé de l'invention peuvent être par exemple des polymères issus d'un procédé de polymérisation radicalaire contrôlée réalisée par mise en contact d'un ou plusieurs monomère(s) éthyléniquement insaturé(s), d'au moins une source de radicaux libres et d'au moins un agent de transfert réversible du type précité. De façon plus spécifique, les polymères organiques vivants utilisés dans le procédé de l'invention peuvent être des polymères séquencés issus d'un procédé de copolymérisation comportant N étapes successives de polymérisations radicalaires (N étant supérieur ou égale à 2), la première de ces étapes étant une polymérisation radicalaire contrôlée réalisée par mise en contact d'un ou plusieurs monomère(s) éthyléniquement insaturé(s), d'au moins une source de radicaux libres et d'au moins un agent de transfert réversible du type précité, et les (N-1) étapes suivantes étant des polymérisations radicalaires contrôlées réalisées par mise en contact d'un ou plusieurs monomère(s) éthyléniquement insaturé(s) différents de ceux de l'étape précédente, d'au moins une source de radicaux libres et de la composition de polymère vivante issue de l'étape précédente.

Ainsi, les polymères organiques vivants (A) utilisés dans le procédé de l'invention peuvent avantageusement être des polymères issus d'un procédé de copolymérisation choisi par exemple parmi les procédés décrits dans les demandes de brevets WO 98/01478 et WO 99/35178, qui mettent en oeuvre des agents de transfert réversible de type dithioesters ou dithiocarbamates, ou parmi les procédés des demandes de brevets WO 98/58974, WO 00/75207 et WO 01/042312 mettant en oeuvre des agents de transfert réversible de type xanthate. Il peut également s'agir de polymères issus obtenus selon un des procédés décrits dans les demandes de brevets WO 99/35177 ou WO 99/31144, qui utilisent des agents de transfert réversible de type dithiocarbamate, ou bien encore selon le procédé décrit dans la demande de brevet FR 2794464, qui met en oeuvre des agents de transfert réversible de type thioether-thione.

Selon un mode particulier de réalisation de l'invention, les polymères organiques vivants (A) utilisés dans le procédé de l'invention peuvent également être issus du procédé mettant en oeuvre les agents de transfert réversible de type dithiophosphoroester du type de celui qui a été décrit dans la demande de brevet français n° 00/09952 déposée le 28Juillet 2000 par la Demanderesse, c'est à dire selon un procédé comprend au moins une étape de polymérisation radicalaire d'une composition contenant :
- au moins un monomère éthyléniquement insaturé
- une source de radicaux libres, et
- au moins un composé de type dithiophosphoroester de formule générale (F) : 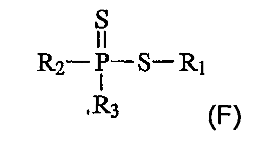 dans laquelle :
   - R₁ représente :
      - . un groupe alkyle, acyle, aryle, aralkyle, alcène ou alcyne, de préférence un groupe alkyle, avantageusement substitué
      - . un cycle carboné ou un hétérocycle, saturé ou non, aromatique et éventuellement substitué,
      - . une chaîne polymère, par exemple issue d'une polymérisation radicalaire ou ionique ou d'une polycondensation,
   - R₂ et R₃, identiques ou différents, représentent :
      - . un atome d'hydrogène,
      - . -S-R₄ , où R₄ a l'une des signification donnée ci-dessus pour R₁,
      - . un radical alkyle, acyle, aryle, aralkyle, ou alcyne, éventuellement substitué,
      - . un cycle carboné ou un hétérocycle, saturé ou non, aromatique, éventuellement substitué ;
   ou bien R₂ et R₃ représentent ensemble les atomes nécessaires pour former un cycle carboné ou un hétérocycle, saturé ou non, aromatique, éventuellement substitué ; et
   p est compris entre 2 et 10,
les groupes R₁, R₂ et R₃, pouvant être substitués, de préférence par des groupes phényles éventuellement substitués, des groupes aromatiques éventuellement substitués, des cycles carbonés saturés ou non, des hétérocycles saturés ou non, ou des groupes alkoxycarbonyle ou aryloxycarbonyle (-COOR), carboxy (-COOH), acyloxy (-O₂CR), carbamoyle (-CONR₂), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR₂), halogène, perfluoroalkyle CₙF₂ₙ₊₁, allyle, époxy, alkoxy (-OR), S-alkyle, S-aryle, des groupes présentant un caractère hydrophile ou ionique tels que les sels alcalins d'acides carboxyliques, les sels alcalins d'acide sulfonique, les chaînes poly(oxyde d'alkylène) (de type poly(oxyde d'éthylène) ou poly(oxyde de propylène)), les substituants cationiques (sels d'ammonium quaternaires), R représentant un groupe alkyle ou aryle, ou une chaîne polymère.

Les groupes alkyle, acyle, aryle, aralkyle ou alcyne éventuellement substitués présents au sein des dithiophosphoroesters de formule (F) possèdent généralement de 1 à 20, avantageusement de 1 à 12, et plus préférentiellement de 1 à 9 atomes de carbone. Ils peuvent être linéaires ou ramifiés. Ils peuvent également être substitués par des atomes d'oxygène, sous forme notamment d'esters, des atomes de soufre ou d'azote.

Parmi les radicaux alkyle envisageables, on peut notamment citer le radical méthyle, éthyle, propyle, butyle, pentyle, isopropyle, tert-butyle, pentyle, hexyle, octyle, decyle ou dodécyle.

Parmi les radicaux aryle, on peut notamment citer le radical phényle, éventuellement substitué notamment par une fonction nitro ou hydroxyle.

Parmi les radicaux aralkyle, on peut notamment citer le radical benzyle ou phénéthyle, éventuellement substitué, notamment par une fonction nitro ou hydroxyle.

Selon ce mode de réalisation spécifique, le dithiophosphoroester de formule (F) peut avantageusement être un composé dans lesquels le groupement R₁ est choisi parmi les groupements suivants :

- CH₂C₆H₅

- CH(CH₃)(CO₂Et)

- CH(CH₃)(C₆H₅)

- CH(CO₂Et)₂

- C(CH₃)(CO₂Et)(S-C₆H₅)

- C(CH₃)₂(C₆H₅)

- C(CH₃)₂CN

ou 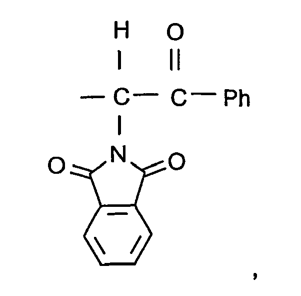 où le symbole "Et" représente un groupe éthyle et le symbole "Ph" représente un groupe phényle.

Quelle que soit leur structure exacte, les dithiophosphoroesters de formule (F) sont facilement accessibles. Ils peuvent ainsi notamment être obtenus par réaction entre P₄S₁₀, K₂CO₃ et un dérivé halogéné selon un procédé décrit par exemple par Nizamov et al. dans Phosphorous Sulfur and Silicon, vol. 132, 85-100 (1998). Une autre voie d'accès aux composés de formule (F) consiste à faire réagir un sel de métal alcalin d'un acide dithiophosphonique avec un dérivé halogéné. A ce sujet, on pourra se reporter à Mastryukova et al (Bull. Acad. Sci. USSR. Div. Chem. Sci (Engl Transl), Vol. 27, 1917 (1978)).

Selon un autre mode de réalisation envisageable, les polymères organiques vivants (A) utilisés dans le procédé de l'invention peuvent également être des copolymères hybrides silicones/organiques obtenus par un procédé de préparation par polymérisation radicalaire activée thermiquement du type de ceux décrits dans la demande de brevet français FR 00/09722 déposée par la demanderesse le 25 juillet 2000, à savoir des copolymères hybrides silicones/organiques comprenant des motifs (r)ₓ(u)_{y}SiO_{[4-(x+y)]/2} dans lesquels:
- x est égal à 0, 1, 2 ou 3, y est égal à 0, 1, 2 ou 3 avec 2 ≤ (x+y)≤ 3 et y est différent de 0 pour au moins un des motifs du copolymère hybride,
- les x groupements (r), identiques ou différents, représentent chacun :
   · un radical alkyle linéaire ou ramifié contenant 1 à 8 atomes de carbone, éventuellement substitué par au moins un halogène, de préférence le fluor, les radicaux alkyle étant de préférence méthyle, éthyle, propyle, octyle et 3,3,3-trifluoropropyle,
   · un radical cycloalkyle contenant entre 5 et 8 atomes de carbone cycliques, éventuellement substitué,
   · un radical aryle contenant entre 6 et 12 atomes de carbone pouvant être substitué, de préférence phényle ou dichlorophényle,
   · une partie aralkyle ayant une partie alkyle contenant entre 5 et 14 atomes de carbone et une partie aryle contenant entre 6 et 12 atomes de carbone, substituée éventuellement sur la partie aryle par des halogènes, des alkyles et/ou des alkoxyles contenant 1 à 3 atomes de carbone,
- les y groupements (u), identiques ou différents, représentent chacun un groupement : 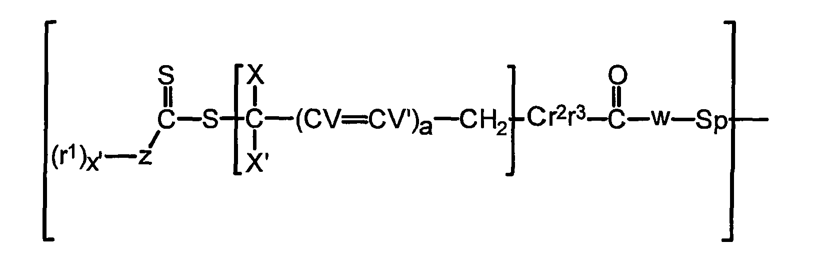 où :
   - z, qui peut différer d'un groupement (u) à un autre, représentent un atome de carbone, de soufre, d'oxygène, de phosphore, d'azote et/ou une valence libre, et de préférence un atome de soufre ou d'oxygène ;
   - x' = 1, 2,3 ou 4 en fonction de la valence de z,
- chacun des groupements r¹, identiques ou différents, représente:
   - un groupe alkyle, acyle, aryle, alcène ou alcyne éventuellement substitué, un cycle carboné, saturé ou non, éventuellement substitué et/ou aromatique, et/ou un hétérocycle, saturé ou non, éventuellement substitué, ces groupes et (hétéro)cycles pouvant être substitués par: des groupes phényles substitués, des groupes aromatiques substitués, ou des groupes : alkoxycarbonyle, aryloxycarbonyle (-COOr⁵), carboxy (-COOH), acyloxy (-O₂Cr⁵), carbamoyle (-CON(r⁵)₂), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-N(r⁵)₂), halogène, allyle, époxy, alkoxy (-Or⁵), S-alkyle, S-aryle, des groupes présentant un caractère hydrophile ou ionique tels que les sels alcalins d'acides carboxyliques, les sels alcalins d'acide sulfonique, les chaînes polyoxyde d'alkylène (POE, POP), les substituants cationiques (sels d'ammonium quaternaires), les groupements r⁵, identiques ou différents, représentant un groupe alkyle ou aryle, et/ou une chaîne polymère,
- un groupement de formule -CₙF₍₂ₙ₊₁₎ avec n compris entre 1 et 20,
- un groupement de formule : 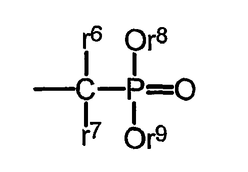
   dans laquelle :
   - r⁶, r⁷, identiques ou non, sont choisis parmi
      - un groupe halogène, -NO₂, -SO₃r¹⁰, -NCO, -CN, -Or¹⁰, -Sr¹⁰, -N(r¹⁰)₂, -COOr¹⁰, -O₂Cr¹⁰, -CON(r¹⁰)₂, -NCO(r¹⁰)₂ et -CₙF₍₂ₙ₊₁₎ avec n compris entre 1 et 20, de préférence égal à 1 et r¹⁰ représentant un atome d'hydrogène ou- un radical alkyle, alcényle, alcynyle, cycloacényle, cycloalcynyle, alkaryle, aralkyle, hétéroaryle ou aryle éventuellement condensé à un hétérocycle aromatique ou non; ces radicaux pouvant éventuellement être substitués par un ou plusieurs groupes identiques ou différents, choisis parmi les atomes d'halogènes, =O, =S, -OH, alcoxy, SH, thioalcoxy, NH₂, mono ou di-alkylamino, CN, COOH, ester, amide, CₙF(₂ₙ₊₁) et/ou éventuellement interrompu par un ou plusieurs atomes choisis parmi O, S, N, P ;
      - un groupe hétérocyclique éventuellement substitué par un ou plusieurs groupes tels que définis précédemment ; ou r⁶ et r⁷ forment ensemble, avec l'atome de carbone auquel ils sont attachés, un groupe C=O, C=S, un cycle hydrocarboné ou un hétérocycle ;
      - et r⁸ et r⁹, identiques ou différents, représentent un groupe tel que défini ci-dessus pour r¹⁰; ou forment ensemble une chaîne hydrocarbonée en C₂-C₄, éventuellement interrompue par un hétéroatome choisi parmi O, S et N ;
- V et V', identiques ou différents, représentent : H, un groupe alkyle ou un halogène,
- X et X', identiques ou différents, représentent H, un halogène ou un groupe R⁴, OR⁴, O₂COR⁴, NHCOH, OH, NH₂, NHR⁴, N(R⁴)₂, (R⁴)₂N⁺O⁻, NHCOR⁴, CO₂H, CO₂R⁴, CN, CONH₂, CONHR⁴ ou CONR⁴₂, dans lesquels R⁴ est choisi parmi les groupes alkyle, aryle, aralkyle, alkaryle, alcène ou organosilyle, éventuellement perfluorés et éventuellement substitués par un ou plusieurs groupes carboxyle, époxy, hydroxyle, alkoxy, amino, halogène ou sulfonique,
- r² et r³, identiques ou différents, représentent :
   - un atome d'hydrogène
   - un groupe alkyle, acyle, aryle, alcène ou alcyne éventuellement substitué ; un cycle carboné, saturé ou non, éventuellement substitué et/ou aromatique ; un hétérocycle, saturé ou non, éventuellement substitué, un groupe alkoxycarbonyle, aryloxycarbonyle (-COOR⁵), carboxy (-COOH), acyloxy (-O₂CR⁵), carbamoyle (-CONR⁵₂), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR⁵₂), halogène, allyle, époxy, alkoxy (-OR⁵), S-alkyle, S-aryle, des groupes présentant un caractère hydrophile ou ionique tels que les sels alcalins d'acides carboxyliques, les sels alcalins d'acide sulfonique, les chaînes polyoxyde d'alkylène), les substituants cationiques (sels d'ammonium quaternaires), R⁵, identiques ou différents, représentant un groupe alkyle ou aryle, et/ou une chaîne polymère, ces radicaux et (hétéro)cycles pouvant être substitués par: des groupes phényles substitués, des groupes aromatiques substitués, ou des groupes : alkoxycarbonyle, aryloxycarbonyle (-COOR⁵), carboxy (-COOH), acyloxy (-O₂CR⁵), carbamoyle (-CONR⁵₂), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR⁵₂), halogène, allyle, époxy, alkoxy (-OR⁵), S-alkyle, S-aryle, des groupes présentant un caractère hydrophile ou ionique tels que les sels alcalins d'acides carboxyliques, les sels alcalins d'acide sulfonique, les chaînes polyoxyde d'alkylène (POE, POP), les substituants cationiques (sels d'ammonium quaternaires), R⁵, identiques ou différents, représentant un groupe alkyle ou aryle, et/ou une chaîne polymère,
- w, qui peut différer d'un groupement (u) à un autre, représente un radical divalent choisi parmi -O-, -NR⁴-, -NH-, ou -S-,
- Sp, qui peut différer d'un groupement (u) à un autre, représente un radical divalent organique de formule -(CH₂)_{x"'}- dans lequel x"' est compris entre 1 et 20, ce radical pouvant être substitué et/ou contenir au moins un hétéroatome,
- a ≈ 0 ou 1,
- m ≥ 1, et lorsque m > 1 les motifs unitaires répétitifs d'indice m sont identiques ou différents.

Ces polymères particuliers, qui se présentent avantageusement sous la forme d'un copolymère hybride silicone/organique constitué d'un squelette silicone linéaire comprenant de 1 à 300 (de préférence 1 à 200) motifs (r)ₓ(u)_{y}SiO_{[4-(x+y)]/2} et comportant au total de 1 à 50 radicaux u, et de préférence de 1 à 10 radicaux u, peuvent être obtenus selon un procédé qui consiste à faire réagir un mélange comprenant
- un initiateur de polymérisation radicalaire.
- au moins un monomère éthyléniquement insaturé de formule

   CXX' (= CV - CV')ₐ = CH₂,

   et
- un composé silicone précurseur comprenant des motifs, identiques ou différents, de formule

   rₓu'_{y}SiO_{[4-(x+y)]/2}

   dans lequel
   - r, x et y ont les définitions données précédemment, et
   - les y radicaux u', identiques ou différents, sont des radicaux monovalents de formule: 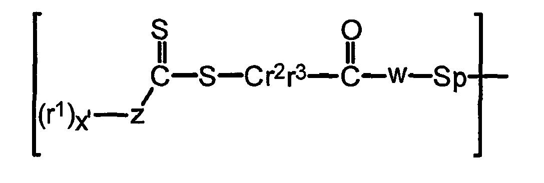 où r¹, x', z, r², r³, w et Sp ont les définitions précitées, les radicaux u' étant et sont de préférence choisis parmi les radicaux suivants : 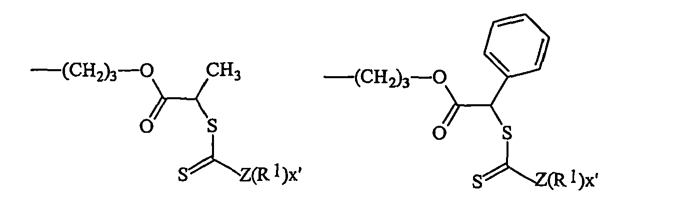 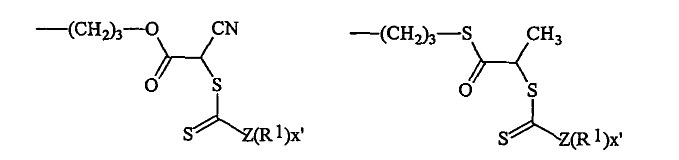 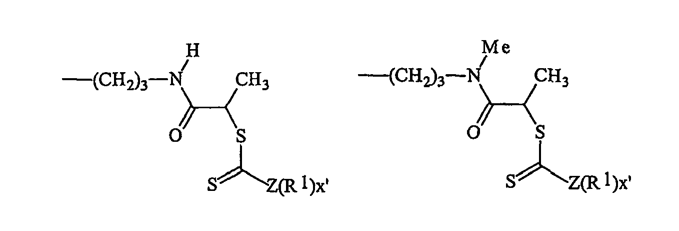 où R¹ représente un groupement répondant à la définition du groupement r¹ défini ci-dessus.

Le composé silicone précurseur utilisé au sein du procédé de préparation de copolymères hybrides peut être obtenu par réaction :
(i) d'une silicone comprenant des motifs de formule:

   RₓU"_{y}SiO_{[4-(x+y)]/2}

   où le radical monovalent U" est selon la formule suivante: 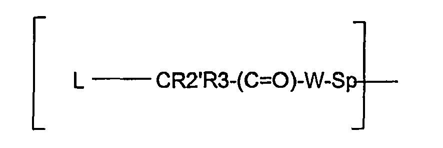 dans laquelle :
   - W et Sp sont de définitions identiques à celles données précédemment,
   - L est un groupement électrofuge, par exemples : Br⁻, Cl⁻, l⁻, OTs⁻, OMs⁻, (C₆H₆)-(C=O)-O⁻, (CH₃)-(C=O)-O⁻, (CF₃)-(C=O)-O⁻.
(ii) avec un composé choisi parmi ceux de formules générales suivantes : 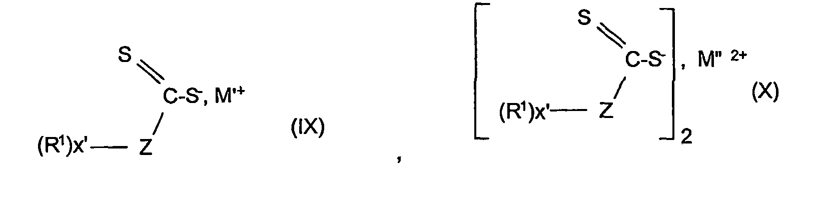 et 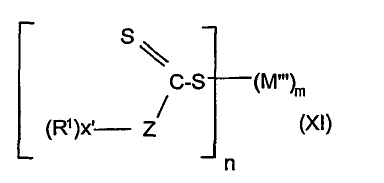 dans lesquelles:
   - M'⁺ représente K⁺, Na⁺, NR₄⁺, ou PR₄⁺, R étant de définition similaire à celle donnée pour R de la formule (I),
   - M"²⁺ représente un métal alcalino-terreux tels que Ca²⁺, Ba²⁺ et Sr²⁺⁺,
   - M"' représente Zn, Cd, m est égal à 1 ou 2, n est égal à 1, 2, 3 ou 4 et de préférence m est égal à 1 et n est égal à 2.

Cette silicone de formule peut être notamment obtenue à partir (i) d'une silicone comprenant des motifs de formule :RₓU"'_{y}SiO_{[4-(x+y)]/2} où le radical monovalent U"' est de formule : -Sp-WH et (ii) d'un composé de formule :

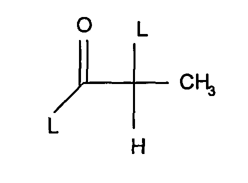

Selon encore un autre mode de réalisation envisageable, les polymères organiques vivants (A) utilisés dans le procédé de l'invention peuvent également être des polymères dits "en forme d'étoiles" tels que ceux obtenus par un procédé du type de celui décrit dans la demande de brevet français n° 01 05144 déposée le 13 Avril 2001 par le Demanderesse, à savoir un procédé qui comprend une étape de polymérisation radicalaire d'une composition contenant :
- une source de radicaux libres, et
- au moins une composition de polymère issue d'un procédé de polymérisation radicalaire vivante et présentant en bout de chaîne au moins une fonction réactivable dithiocarbonylée ou dithiophosphorylée,
   et
- au moins un monomère réticulant,
ledit monomère réticulant étant choisi parmi des composés organiques connus comme étant réactifs par voie radicalaire, et comportant entre deux et 10 insaturations éthyléniques, et de préférence 2, ce monomère réticulant pouvant être avantageusement choisi parmi les dérivés acryliques, méthacryliques, acrylamido, méthacrylamido, ester vinylique, éther vinylique, diénique, styrénique, alpha-méthyl styrénique et allylique.

De façon particulièrement préférée, les polymères organiques vivants (A) utilisés dans le procédé de l'invention sont des polymères issus d'un procédé de polymérisation ou de copolymérisation comportant au moins une étape de polymérisation radicalaire contrôlée mettant en oeuvre un agent de transfert réversible par addition-fragmentation choisi parmi un xanthate, un dithiocarbamate ou un dithioester. Avantageusement il s'agit de polymères vivants issus de la mise en oeuvre d'agents de transfert de type xanthate.

Par "source de radicaux libres" au sens de l'invention, on entend, de façon large, tout composé ou mélange de composés susceptible de mener à la formation d'espèces radicalaires dans des conditions de mise en oeuvre adéquates (activation thermique, irradiation ...), ce composé ou mélange de composé étant utilisé dans lesdites conditions requises. De préférence, la source de radicaux libres (B) utilisée dans le procédé de la présente invention est un composé ou un mélange de composés menant à la formation de radicaux libres sous l'effet d'un traitement thermique. Ainsi, il peut par exemple s'agir d'un initiateur de polymérisation radicalaire de type usuel. La source de radicaux libres (B) utilisée dans le procédé de l'invention peut ainsi notamment être choisie parmi :
- les peroxydes d'hydrogène, tels que l'hydroperoxyde de butyle tertiaire, l'hydroperoxyde de cumène, le t-butyl-peroxyacétate, le t-butylperoxybenzoate, le t-butylperoxyoctoate, le t-butylperoxynéodécanoate, le t-butylperoxyisobutarate, le peroxyde de lauroyle, le t-amylperoxypivalte, le t-butylperoxypivalate, le peroxyde de dicumyl, le peroxyde de benzoyle, le persulfate de potassium, ou encore le persulfate d'ammonium ;
- les composés azoïques tels que : le 2-2'-azobis(isobutyronitrile), le 2,2'-azobis(2-butanenitrile), le 4,4'-azobis(4-acide pentanoïque), le 1,1'-azobis(cyclohexane-carbonitrile), le 2-(t-butylazo)-2-cyanopropane, le 2,2'-azobis[2-méthyl-N-(1,1)-bis(hydroxyméthyl)-2-hydroxyéthyl] propionamide, le 2,2'-azobis(2-méthyl-N-hydroxyéthyl]-propionamide, le dichlorure de 2,2'-azobis(N,N'-diméthylèneisobutyramidine), le dichlorure de 2,2'-azobis (2-amidinopropane), le 2,2'-azobis (N,N'-diméthylèneisobutyramide), le 2,2'-azobis(2-méthyl-N-[1,1-bis (hydroxyméthyl)-2-hydroxyéthyl] propionamide), le 2,2'-azobis(2-méthyl-N-[1,1-bis (hydroxyméthyl)éthyl] propionamide), le 2,2'-azobis[2-méthyl-N-(2-hydroxyéthyl) propionamide], ou bien encore le 2,2'-azobis(isobutyramide) dihydrate ; ou
- les systèmes redox comportant des combinaisons telles que, par exemple :
   - les mélanges de peroxyde d'hydrogène, d'alkyle, peresters, percarbonates et similaires et d'un composé choisi parmi un sel de fer, un sel de titane, le formaldéhyde sulfoxylate de zinc ou le formaldéhyde sulfoxylate de sodium, et des sucres réducteurs ;
   - les persulfates, perborates ou perchlorates de métaux alcalins ou d'ammonium, en association avec un bisulfite de métal alcalin, tel que le métabisulfite de sodium, et des sucres réducteurs;
   - les persulfates de métal alcalin en association avec un acide arylphosphinique, tel que l'acide benzène phosphonique et autres similaires, et des sucres réducteurs

De préférence, la source de radicaux libres (B) de l'invention comprend un peroxyde, choisi avantageusement, le cas échéant, parmi les composés répondant à l'une des formules (I) à (IV) suivantes :

R'-O-O-R" (I),

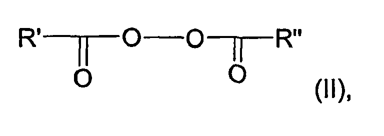

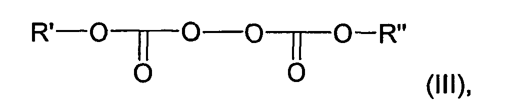

et 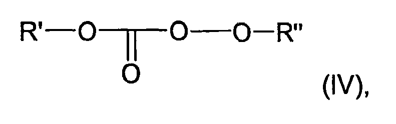 dans lesquelles les groupements R' et R", identiques ou différents, représentent des groupes alkyle, linéaire ou ramifié, aryle ou aralkyle, éventuellement substitués.

Ainsi, comme exemples de peroxydes particulièrement adaptés à titre de source de radicaux libres (B) dans le procédé de l'invention, on peut notamment citer le diisobutyryl peroxyde, cumyl peroxyneodecanoate, ter-amyl peroxyneodécanoate, di(2-ethylhexyl) peroxydicarbonate, tert-butyl peroxyneodécanoate, le dibutyl peroxydicarbonate, dicetyl peroxydicarbonate, dimyristyl peroxydicarbonate, tert-butyl peroxyneoheptanoate, tert-amyl peroxypivalate, didecanoyl peroxyde, tert-amyl peroxy-2-ethylhexanoate, tert-butyl peroxyisobutyrate, 1,4-di(tert-butylperoxycarbo)cyclohexane, tert-butyl peroxyacétate, tert-butyl peroxybenzoate, di-tert-amyl peroxyde, tert-butyl cumyl peroxyde, le peroxyde de bis-tertiobutyl, le peroxyde de dicumyl, le peroxyde de dilauroyle ou le di(4-tert-butylcyclohexyl)peroxydicarbonate.

Quelle que soit sa nature exacte, la source de radicaux libres (B) mise en oeuvre selon le procédé de l'invention est utilisée dans des conditions permettant la production de radicaux libres, ce qui est généralement réalisé par activation thermique, c'est à dire en élevant la température du milieu réactionnel, généralement à une température de l'ordre de l'ambiante (environ 20°C) à 200 °C, de préférence de 40 à 180°C, avantageusement de 80 à 160 °C.

La source de radicaux libres utilisée peut être introduite en une seule fois au sein du milieu réactionnel, mais elle peut aussi être introduite progressivement, le cas échéant par portions ou en continu.

La quantité de la source de radicaux libres dépend de son efficacité et de son mode d'introduction. Avantageusement, la source de radicaux libres utilisée est introduite en une quantité telle que la quantité de radicaux libres qu'elle est susceptible de libérer est comprise entre 50 % et 200 % en mole, et de préférence comprise entre 100 % et 150 % en mole, par rapport à la quantité molaire totale de fonctions dithiocarbonylées ou dithiophosphorylées portées par l'ensemble des polymères organiques vivants présents dans le milieu.

Une autre caractéristique du procédé de l'invention est la mise en oeuvre spécifique d'un composé organique (C) porteur d'un atome d'hydrogène labile.

Par "hydrogène labile", on entendra, au sens de l'invention, un hydrogène lié au composé organique par une liaison sigma d'intensité suffisamment faible pour que cette liaison puisse mener à une rupture radicalaire homolytique.

Sans vouloir être lié en aucune façon à une théorie particulière, il semble pouvoir être avancé que, dans le procédé de l'invention, des radicaux libres RL• issus de la source de radicaux libres employée réagissent avec la fonction dithiocarbonylée -S(C=S)-R (ou -S(P=S)-R) du polymère organique vivant, pour former des espèces radicalaires selon le schéma réactionnel suivant

(Pol)-S(C=S)-R + RL• <=> (Pol)• + RL-S(C=S)-R

(où (Pol) désigne la chaîne polymère, le même schéma réactionnel pourrait être présenté avec la fonction -S(P=S)-).
On suppose que le composé organique porteur d'un atome d'hydrogène labile mis en oeuvre selon l'invention (noté Org-H) joue le rôle d'agent de transfert d'hydrogène et réagit sur le radical de type (Pol)• ainsi formé selon le bilan réactionnel :

(Pol)• + Org-H→ (Pol)H + Org•

En tout état de cause, quel que soit le mécanisme exact mis en oeuvre dans le procédé de l'invention, on obtient spécifiquement à l'issu de ce procédé une substitution de la (ou des) fonction(s) dithiocarbonylée(s) ou dithiophosphorylée(s) initialement présente sur le polymère organique vivant mis en oeuvre par un (ou des) atome(s) d'hydrogène(s).

Le composé organique (C) porteur d'un atome d'hydrogène labile qui est mis en oeuvre selon l'invention est de préférence choisi parmi:
- les alcools secondaires de formule (HO)CH(R^{I})(R^{II}),
- les mercaptans de formule R^{III}SH,
- les phosphites de formule (O=)PH(-OR^{IV})(-OR^{V}),
- les silanes de formule R^{VI}R^{VII}R^{VIII}SiH,
   ou
   - les acétals de formule R^{IX}CH(OR^{X})(OR^{XI}),
où les groupements R^{I}, R^{II}, R^{III}, R^{IV}, R^{V}, R^{VI}, R^{VII}, R^{VIII}, R^{IX}, R^{X} et R^{XI} représentent chacun, de façon indépendante, un radical alkyle, cycloalkyle, alcoxy, alcène, acyle, aryle, aralkyle, aralcényle ou aralcynyle, ces radicaux pouvant être éventuellement substitués.

De préférence, R^{I}, R^{II}, R^{III}, R^{IV}, R^{V}, R^{VI}, R^{VII}, R^{VIII}, R^{IX}, R^{X} et R^{XI} sont choisis parmi un radical alkyle de C1 à C8 et le radical phényl.

De façon avantageuse, ce composé organique (C) porteur d'un atome d'hydrogène labile est choisi parmi le 2-propanol, 2-butanol, 2-octanol, mercaptoéthanol, phosphite de diéthyle, diméthylacétate du benzaldéhyde et le diméthylphénylsilane. Plus particulièrement, ce composé organique (C) est le 2-propanol.

Par ailleurs, le composé organique (C) porteur d'un atome d'hydrogène labile mis en oeuvre selon l'invention est généralement un composé organique capable d'assurer le rôle de solvant du polymère vivant utilisé, qui présente en bout de chaîne au moins une fonction réactivable dithiocarbonylée ou dithiophosphorylée. Dans ce cas, la quantité de composé (C) mise en oeuvre est généralement comprise entre 1 et 50000 équivalents molaires, et de préférence entre 2 et 10000 équivalents molaires, par rapport au polymère (A).

Dans le cas où ce composé n'est pas à même d'assurer ce rôle, on préfère conduire la réaction en présence d'un co-solvant, choisi, le cas échéant, notamment parmi l'eau, l'éthanol, le toluène et le tetrahyrofurane (THF). Dans ce cas, la quantité de composé (C) mise en oeuvre est le plus souvent comprise entre 1 et 200 équivalents molaires, et avantageusement entre 20 et 100 équivalents molaires, par rapport au polymère (A).

Dans le cas le plus général, le composé (C) est mis en oeuvre à raison de 1 à 50000 équivalents molaires, et de préférence entre 2 et 10000 équivalents molaires, par rapport au polymère (A).

Par ailleurs, dans le procédé de l'invention, l'étape de mise en contact du polymère vivant (A), de la source de radicaux libres (B) et du composé organique porteur de l'hydrogène labile (C) est généralement conduite à une température suffisante pour permettre un amorçage effectif de la source de radicaux libres, mais on préfère également le plus souvent que cette température soit inférieure ou égale à la température d'ébullition des différents réactifs mis en oeuvre, sans quoi on est conduit à réaliser le procédé de l'invention sous pression, ce qui ne compromet certes pas l'efficacité du procédé dans le cas général, mais est susceptible de se traduire en termes d'élévation de coûts de mise en oeuvre.

Ainsi, dans la cas le plus général, sous pression atmosphérique, on préfère que cette étape soit conduite à une température comprise entre 0°C et 200°C. De préférence, cette température de mise en oeuvre est supérieure à 20°C, et elle est avantageusement inférieure à 180°C. Ainsi, cette température peut typiquement être comprise entre 40°C et 160°C.

Les exemples non limitatifs exposés ci-après illustrent le procédé de l'invention.

### EXEMPLES

### Exemple 1:

### - Synthèse d'un poly(acide acrylique) terminé O-ethyl xanthate:

Dans un ballon bicol surmonté d'un réfrigérant, on introduit 7 g d'acide acrylique, 28 g d'éthanol, 2,02 g de S-ethylpropionyl O-ethyl xanthate et 0,48 g d'azobisisobutyronitrile. Le mélange est porté à 70°C pendant 4 heures. Le polyacide acrylique obtenu a les caractéristiques suivantes : Mn=2950 g/mol, Mw/Mn=1.19.

Mn est la masse molaire moyenne en nombre. Elle est mesurée par chromatographie d'exclusion stérique (CES) dans l'eau, avec un étalonnage relatif par du polyoxyde d'éthylène.
Mw/Mn est l'indice de polymolécularité (donné par CES). Mw est la masse molaire moyenne en poids.

### - Réduction radicalaire du polyacide acrylique terminé O-éthyl xanthate :

A un échantillon de 20ml de solution du polyacide acrylique de l'exemple 1, 27,8 g de 2-propanol sont rajoutés. Le mélange est ensuite porté à 80°C. 0,37 g de peroxyde de dilauroyle sont introduits toutes les deux heures pendant 14 heures. Puis, le système est maintenu en température pendant 3 heures supplémentaires. En fin de réaction, le produit brut réactionnel est analysé par CES dans l'eau. Par détection UV à 290 nm, longueur d'onde à laquelle le groupement S(C=S) du xanthate absorbe très fortement, il est constaté une disparition totale du signal. Ceci est caractéristique de la réduction totale du bout de chaîne xanthate.
Egalement, après purification de l'échantillon par extraction liquide-liquide (hexane/éther), l'analyse du polyacide acrylique purifié par RMN du proton et du carbone montre l'absence des signaux caractéristiques de l'extrémité xanthate.

### Exemple 2 :

### - Réduction radicalaire du polyacide acrylique terminé O-éthyl xanthate :

A un échantillon de 20ml de solution du polyacide acrylique dont la synthèse est décrite ci-dessus, 27,8 g de 2-propanol sont rajoutés. Le mélange est ensuite porté à 80°C. 3,7 de percarbonate de p-di-t-butylcyclohexyle sont ensuite introduits, et la réaction est conduite à cette température pendant cinq heures. En fin de réaction, le produit brut réactionnel est analysé par CES dans l'eau. Par détection UV à 290 nm, longueur d'onde à laquelle le groupement S(C=S) du xanthate absorbe très fortement, il est constaté une disparition totale du signal. Ceci est caractéristique de la réduction totale du bout de chaîne xanthate.
Egalement, après purification de l'échantillon par extraction liquide-liquide (hexane/ether), l'analyse du polyacide acrylique purifié par RMN du proton et du carbone montre l'absence des signaux caractéristiques de l'extrêmité xanthate.

## Revendications

1. Procédé de préparation d'un polymère, qui comprend une étape consistant à mettre en contact :
(A) au moins un polymère organique vivant présentant en bout de chaîne au moins une fonction réactivable dithiocarbonylée ou dithiophosphorylée ;
(B) au moins une source de radicaux libres ; et
(C) au moins un composé organique porteur d'un atome d'hydrogène labile.

2. Procédé selon la revendication 1, **caractérisé en ce que** la fonction réactivable dithiocarbonylée ou dithiophosphorylée présente en bout de chaîne sur le polymère (A) mis en oeuvre est une fonction -S(C=S)-R ou - S(P=S)-R, où R désigne :
(i) un groupement alkyle, halogénoalkyle, perfluoroalkyle, alcényle ou alcynyle, acyle, aryle, arylalkyle, arylalcényle, arylalcynyle, ou bien un cycle carboné ou un hétérocycle, ou une chaîne polymère ;
(ii) un radical -OR^{a}, dans lequel R^{a} désigne un groupement choisi parmi :
- un groupement alkyle, halogénoalkyle, perfluoroalkyle, alcényle, alcynyle, acyle, aryle, arylalkyle, arylalcényle, arylalcynyle, ou bien un cycle carboné ou un hétérocycle, ou bien une chaîne polymère ;
- un groupement -CR^{b}R^{c}PO(OR^{d})(OR^{e}), dans lequel :
- R^{b} et R^{c} représentent chacun, indépendamment l'un de l'autre, un atome d'hydrogène, un atome d'halogène, un groupement perfluoroalkyle, un cycle carboné ou un hétérocycle, ou bien encore un groupement -NO₂, -NCO, -CN, ou un groupement choisi parmi les groupements de type -R^{f}, -SO₃R^{f}, -OR^{f}, -SR^{f}, -NR^{f}R^{g}, -OOCR^{f}, -CONR^{f}R^{g}, ou -SO₃R^{f}, dans lesquels R^{f} et R^{g} désignent chacun, de façon indépendante, un groupement alkyle, alcényle, alcynyle, aryle, aryle, arylalkyle, arylalcényle, ou arylalcynyle ;
ou bien R^{b} et R^{c} forment ensemble avec le carbone auquel il sont rattachés,un groupement C=O ou C=S, ou bien un cycle hydrocarboné ou un hétérocycle ; et
- R^{d} et R^{e} représentent chacun, indépendamment l'un de l'autre, un radical répondant à l'une des définitions données ci-dessus pour le groupement R^{f};
ou bien R^{d} et R^{e} forment ensemble une chaîne hydrocarbonée comportant de 2 à 4 atome de carbone, éventuellement interrompue par un groupement -O-, -S-, ou - NR^{h}-, où R^{h} répond à l'une des définitions données ci-dessus pour le groupement R^{f};
(iii) un groupement-NRⁱR^{j} où :
- Rⁱ et R^{j} représentent indépendamment l'un de l'autre un radical choisi parmi un groupement alkyle, halogénoalkyle, alcényle, alcynyle, acyle, ester, aryle, arylalkyle, arylalcényle, arylalcynyle, ou un cycle carboné; ou
- Rⁱ et R^{j} forment ensemble une chaîne hydrocarbonée comportant de 2 à 4 atome de carbone, éventuellement interrompue par un groupement -O-, -S-, ou -NR^{H}-, où R^{H} répond à l'une des définitions données ci-dessus pour le groupement R^{f}, ladite chaîne hydrocarbonée formant avantageusement un cycle à 5 chaînons avec l'azote auquel sont rattachés Rⁱ et R^{j},
les radicaux Rⁱ et R^{j} induisant de préférence un effet électroattracteur ou un effet de délocalisation vis-à-vis de la densité électronique de l'atome d'azote auquel ils sont liés.

3. Procédé selon la revendication 1, **caractérisé en ce que** le polymère organique vivant (A) est un polymère issu d'un procédé mettant en oeuvre une polymérisation radicalaire vivante utilisant au moins un agent de transfert réversible par addition-fragmentation, de type dithioester, xanthate, dithiocarbamate, thioether-thione, trithiocarbonate ou dithiophosphoroester.

4. Procédé selon la revendication 3, **caractérisé en ce que** le polymère (A) est issu d'un procédé de polymérisation ou de copolymérisation comportant au moins une étape de polymérisation radicalaire contrôlée mettant en oeuvre un agent de transfert réversible par addition-fragmentation choisi parmi un xanthate, un dithiocarbamate ou un dithioester.

5. Procédé selon l'une quelconque des revendications 1 à 3, **caractérisé en ce que** la source de radicaux libres (B) mise en oeuvre comprend un peroxyde choisi parmi les composés répondant à l'une des formules (I) à (IV) suivantes :
R'-Q-Q-R" (I), 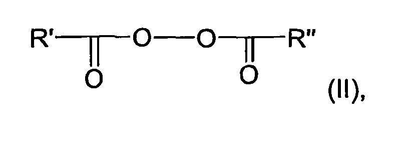 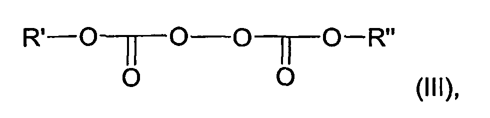
et 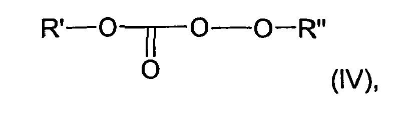 dans lesquelles les groupements R' et R", identiques ou différents, représentent des groupes alkyle, linéaire ou ramifié, aryle ou aralkyle, éventuellement substitués.

6. Procédé selon la revendication 5, **caractérisé en ce que** la source de radicaux libres (B) mise en oeuvre comprend un peroxyde choisi parmi le diisobutyryl peroxyde, cumyl peroxyneodecanoate, ter-amyl peroxyneodécanoate, di(2-ethylhexyl) peroxydicarbonate, tert-butyl peroxyneodécanoate, le dibutyl peroxydicarbonate, dicetyl peroxydicarbonate, dimyristyl peroxydicarbonate, tert-butyl peroxyneoheptanoate, tert-amyl peroxypivalate, didecanoyl peroxyde, tert-amyl peroxy-2-ethylhexanoate, tert-butyl peroxyisobutyrate, 1,4-di(tert-butylperoxycarbo)cyclohexane, tert-butyl peroxyacétate, tert-butyl peroxybenzoate, di-tert-amyl peroxyde, tert-butyl cumyl peroxyde, le peroxyde de bis-tertiobutyl, le peroxyde de dicumyl, le peroxyde de dilauroyle et le di(4-tert-butylcyclohexyl)peroxydicarbonate.

7. Procédé selon l'une quelconque des revendications 1 à 6, **caractérisé en ce que** la source de radicaux libres (B) est introduite en une quantité telle que la quantité de radicaux libres qu'elle est susceptible de libérer est comprise entre 50 et 200 % en mole par rapport à la quantité totale molaire de fonctions dithiocarbonylées ou dithiophosphorylées portées par l'ensemble des polymères organiques vivants (A) mis en oeuvre.

8. Procédé selon l'une quelconque des revendications 1 à 7, **caractérisé en ce que** le composé organique (C), porteur d'un hydrogène labile, est choisi parmi :
- les alcools secondaires de formule (HO)CH(R^{I})(R^{II}),
- les mercaptans de formule R^{III}SH,
- les phosphites de formule (O=)PH(-OR^{IV})(-OR^{V}),
- les silanes de formule R^{VI}R^{VII}R^{VIII}SiH,
ou
- les acétals de formule R^{IX}CH(OR^{X})(OR^{XI}),
où les groupements R^{I}, R^{II}, R^{III}, R^{IV}, R^{V}, R^{VI}, R^{VII}, R^{VIII}, R^{IX}, R^{X} et R^{XI} représentent chacun, de façon indépendante, un radical alkyle, cycloalkyle, alcoxy, alcène, acyle, aryle, aralkyle, aralcényle ou aralcynyle, ces radicaux pouvant être éventuellement substitués.

9. Procédé selon l'une quelconque des revendications 1 à 8, **caractérisé en ce que** le composé (C) est mis en oeuvre à raison de 1 à 50000 équivalents molaires, et de préférence de 2 à 10000 équivalents molaires par rapport au polymère (A).

10. Procédé selon l'une quelconque des revendications 1 à 9, **caractérisé en ce que** l'étape de mise en contact du polymère vivant (A), de la source de radicaux libres (B) et du composé organique porteur de l'hydrogène labile (C) est conduite à une température comprise entre 0°C et +200°C.

## Claims

1. Method for preparing a polymer, which comprises a step which involves bringing into contact:
(A) at least one living organic polymer which has, at the end of the chain, at least one reactive dithiocarbonylate or dithiophosphorylate function;
(B) at least one source of free radicals; and
(C) at least one organic compound which carries an atom of unstable hydrogen.

2. Method according to claim 1, **characterised in that** the reactive dithiocarbonylate or dithiophosphorylate function present at the end of the chain on the polymer (A) used is an -S(C=S)-R or -S(P=S)-R function, where R refers to:
(i) an alkyl, halogenoalkyl, perfluoroalkyl, alkenyl or alkynyl, acyl, aryl, arylalkyl, arylalkenyl, arylalkynyl group or a carbocycle or a heterocycle or a polymer chain;
(ii) an -OR^{a} radical, in which R^{a} refers to a group selected from:
- an alkyl, halogenoalkyl, perfluoroalkyl, alkenyl, alkynyl, acyl, aryl, arylalkyl, arylalkenyl, arylalkynyl group or a carbocycle or a heterocycle or a polymer chain;
- a -CR^{b}R^{c}PO (OR^{d}) (OR^{e}) group in which:
- R^{b} and R^{c} each represent, independently of each other, a hydrogen atom, a halogen atom, a perfluoroalkyl group, a carbocycle or a heterocycle or an -NO₂, -NCO, -CN group, or a group selected from the groups of the type R^{f}, -SO₃R^{f}, -OR^{f}, - SR^{f}, -NR^{f}R^{g}, -OOCR^{f}, -CONR^{f}R^{g}, or -SO₃R^{f} in which R^{f} and R^{g} each designate, in an independent manner, an alkyl, alkenyl, alkynyl, acyl, aryl, arylalkyl, arylalkenyl or arylalkynyl group;
or R^{b} and R^{c} together form, with the carbon to which they are attached, a C=O or C=S group or a hydrocarbon cycle or a heterocycle; and
- R^{d} and R^{e} each represent, independently of each other, a radical which complies with one of the definitions given above for the R^{f} group;
or R^{d} and R^{e} together form a hydrocarbon chain which comprises from 2 to 4 atoms of carbon, optionally interrupted with an -O-, -S-, or -NR^{h}- group where R^{h} complies with one of the definitions given above for the R^{f} group;
(iii) an -NRⁱR^{j} group where:
- Rⁱ and R^{j} represent, independently of each other, a radical selected from an alkyl, halogenoalkyl, alkenyl, alkynyl, acyl, ester, aryl, arylalkyl, arylalkenyl, arylalkynyl group or a carbocycle; or
- Rⁱ and R^{j} together form a hydrocarbon chain which comprises from 2 to 4 atoms of carbon, optionally interrupted with an -O-, -S- or -NR^{H}- group, where R^{H} complies with one of the definitions given above for the R^{f} group, the hydrocarbon chain advantageously forming a cycle having 5 chain links with the nitrogen to which Rⁱ and R^{j} are attached, the radicals Rⁱ and R^{j} preferably bringing about an electroattractive effect or delocalisation effect with respect to the electron density of the nitrogen atom to which they are connected.

3. Method according to claim 1, **characterised in that** the living organic polymer (A) is a polymer which originates from a method which implements a living radical polymerisation using at least one transfer agent which is reversible by means of addition-fragmentation, of the type dithioester, xanthate, dithiocarbamate, thioether-thione, trithiocarbonate or dithiophosphoroester.

4. Method according to claim 3, **characterised in that** the polymer (A) originates from a method of polymerisation or copolymerisation which comprises at least one step for controlled radical polymerisation which uses a transfer agent which is reversible by means of addition-fragmentation selected from a xanthate, a dithiocarbamate or a dithioester.

5. Method according to any one of claims 1 to 3, **characterised in that** the source (B) of free radicals used comprises a peroxide selected from the compounds which correspond to one of the following formulae (I) to (IV):
R'-O-O-R" (I), 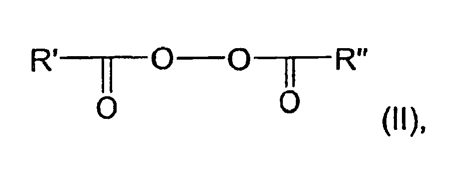 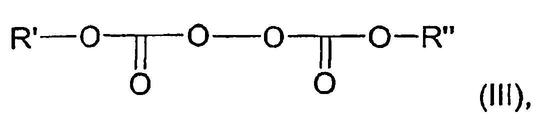
and 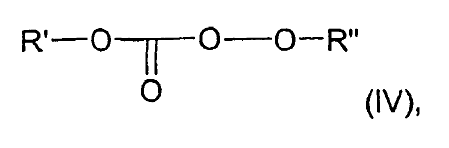 in which the R' and R" groups which may be identical or different represent alkyl, linear or branched groups, aryl or aralkyl groups which may optionally be substituted.

6. Method according to claim 5, **characterised in that** the source (B) of free radicals used comprises a peroxide selected from diisobutyryl peroxide, cumyl peroxyneodecanoate, tert-amyl peroxyneodecanoate, di(2-ethylhexyl) peroxydicarbonate, tert-butyl peroxyneodecanoate, dibutyl peroxydicarbonate, dicetyl peroxydicarbonate, dimyristyl peroxydicarbonate, tert-butyl peroxyneoheptanoate, tert-amyl peroxypivalate, didecanoyl peroxide, tert-amyl peroxy-2-ethylhexanoate, tert-butyl peroxyisobutyrate, 1,4-di(tert-butylperoxycarbo) cyclohexane, tert-butyl peroxyacetate, tert-butyl peroxybenzoate, di-tert-amyl peroxide, tert-butyl cumyl peroxide, bis-tertiobutyl peroxide, dicumyl peroxide, dilauroyl peroxide and di(4-tert-butylcyclohexyl)peroxydicarbonate.

7. Method according to any one of claims 1 to 6, **characterised in that** the source (B) of free radicals is introduced in a quantity such that the quantity of free radicals that it is capable of releasing is between 50 and 200 molar % relative to the total molar quantity of dithiocarbonylate or dithiophosphorylate functions carried by all the living organic polymers (A) used.

8. Method according to any one of claims 1 to 7, **characterised in that** the organic compound (C) which carries an unstable hydrogen is selected from:
- secondary alcohols having the formula (HO)CH(R^{I})(R^{II}),
- mercaptans having the formula R^{III}SH,
- phosphites having the formula (O=)PH(-OR^{IV}) (-OR^{V}),
- silanes having the formula R^{VI}R^{VII}R^{VIII}SiH,
or
- acetates having the formula R^{IX}CH (OR^{X}) (OR^{XI}),
where the groups R^{I}, R^{II}, R^{III}, R^{IV}, R^{V}, R^{VI}, R^{VII}, R^{VIII}, R^{IX}, R^{X} and R^{XI} each represent, independently, an alkyl, cycloalkyl, alkoxy, alkene, acyl, aryl, aralkyl, aralkenyl, or aralkynyl radical, these radicals optionally being able to be substituted.

9. Method according to any one of claims 1 to 8, **characterised in that** the compound (C) is used at a ratio of from 1 to 50000 molar equivalents, and preferably from 2 to 10000 molar equivalents relative to the polymer (A).

10. Method according to any one of claims 1 to 9, **characterised in that** the step for bringing into contact the living polymer (A), the source (B) of free radicals, and the organic compound (C) which carries the unstable hydrogen is brought to a temperature of between 0°C and +200°C.

## Patentansprüche

1. Verfahren zur Herstellung eines Polymers, das einen Schritt umfasst, der darin besteht, dass miteinander in Kontakt gebracht werden:
(A) mindestens ein lebendes organisches Polymer, das am Kettenende mindestens eine reaktivierbare Dithiocarbonyl- oder Dithiophosphorylfunktion aufweist;
(B) mindestens eine Quelle von freien Radikalen; und
(C) mindestens eine ein labiles Wasserstoffatom tragende organische Verbindung.

2. Verfahren nach Anspruch 1, **dadurch gekennzeichnet, dass** die am Kettenende an dem eingesetzten Polymer (A) vorhandene reaktivierbare Dithiocarbonyl- oder Dithiophosphorylfunktion eine Funktion -S(C=S)-R oder -S(P=S)-R ist, worin R bedeutet:
(i) eine der Gruppen Alkyl, Halogenalkyl, Perfluoralkyl, Alkenyl oder Alkinyl, Acyl, Aryl, Arylalkyl, Arylalkenyl, Arylalkinyl oder einen Kohlenstoffring oder einen Heterocyclus oder eine Polymerkette;
(ii) einen Rest -OR^{a}, in dem R^{a} eine Gruppe bezeichnet, die ausgewählt ist aus:
- einer der Gruppen Alkyl, Halogenalkyl, Perfluoralkyl, Alkenyl, Alkinyl, Acyl, Aryl, Arylalkyl, Arylalkenyl, Arylalkinyl oder einen Kohlenstoffring oder einen Heterocyclus oder eine Polymerkette;
- eine Gruppe -CR^{b}R^{c}PO (OR^{d}) (OR^{e}), worin:
- R^{b} und R^{c} jeweils unabhängig voneinander ein Wasserstoffatom, ein Halogenatom, eine Perfluoralkylgruppe, ein Kohlenstoffring oder einen Heterocyclus oder auch eine Gruppe -NO₂, -NCO, -CN oder eine Gruppe darstellen, die aus den Gruppen vom Typ -R^{f}, -SO₃R^{f}, -OR^{f}, -SR^{f}, -NR^{f}R^{g}, -OOCR^{f}, -CONR^{f}R^{g} oder -SO₃R^{f} ausgewählt ist, in denen R^{f} und R^{g} jeweils unabhängig voneinander eine der Gruppen Alkyl, Alkenyl, Alkinyl, Acyl, Aryl, Arylalkyl, Arylalkenyl, Arylalkinyl darstellen;
oder R^{b} und R^{c} zusammen mit dem Kohlenstoff, an den sie gebunden sind, eine Gruppe C=O oder C=S oder einen Kohlenwasserstoffring oder einen Heterocyclus bilden; und
- R^{d} und R^{e} jeweils unabhängig voneinander einen Rest darstellen, der einer der oben für die Gruppe R^{f} angeführten Definitionen entspricht;
oder R^{d} oder R^{e} zusammen eine Kohlenwasserstoffkette mit 2 bis 4 Kohlenstoffatomen bilden, die gegebenenfalls durch eine Gruppe -O-, -S- oder -NR^{h}- unterbrochen ist, worin R^{h} einer der oben für die Gruppe R^{f} angeführten Definitionen entspricht;
(iii) eine Gruppe -NRⁱR^{j}, worin:
- Rⁱ und R^{j} unabhängig voneinander einen Rest darstellen, der aus einer der Gruppen Alkyl, Halogenalkyl, Alkenyl, Alkinyl, Acyl, Ester, Aryl, Arylalkyl, Arylalkenyl, Arylalkinyl oder einem Kohlenstoffring ausgewählt ist; oder
- Rⁱ und R^{j} zusammen eine Kohlenwasserstoffkette mit 2 bis 4 Kohlenstoffatomen bilden, die gegebenenfalls durch eine Gruppe -O-, -S- oder -NR^{H}- unterbrochen ist, worin R^{H} einer der oben für die Gruppe R^{f} angeführten Definitionen entspricht, wobei diese Kohlenwasserstoffkette vorteilhafterweise mit dem Stickstoff, an den Rⁱ und R^{j} gebunden sind, einen Ring mit 5 Gliedern bilden,
wobei die Rest Rⁱ und R^{j} vorzugsweise eine elektronenziehende Wirkung oder eine Delokalisierungswirkung gegenüber der elektronischen Dichte des Stickstoffatoms, an das sie gebunden sind, induzieren.

3. Verfahren nach Anspruch 1, **dadurch gekennzeichnet, dass** das lebende organische Polymer (A) ein Polymer ist, das aus einem Verfahren kommt, das eine lebende radikalische Polymerisation einsetzt, die mindestens ein Mittel zur reversiblen Additions-Fragmentierungs-Übertragung vom Typ Dithioester, Xynthat, Dithiocarbamat, Thioetherthion, Trithiocarbonat oder Dithiophosphorester verwendet.

4. Verfahren nach Anspruch 3, **dadurch gekennzeichnet, dass** das Polymer (A) aus einem Polymerisations- oder Copolymerisationsverfahren kommt, das mindestens einen Schritt der kontrollierten radikalischen Polymerisation umfasst, die ein Mittel zur reversiblen Additions-Fragmentierungs-Übertragung einsetzt, das aus einem Xanthat, einem Dithiocarbamat oder einem Dithioester ausgewählt ist.

5. Verfahren nach einem der Ansprüche 1 bis 3, **dadurch gekennzeichnet, dass** die eingesetzte Quelle von freien Radikalen (B) ein Peroxid umfasst, das aus den Verbindungen ausgewählt ist, die einer der folgenden Formeln (I) bis (IV) entsprechen:
R'-O-O-R" (I), 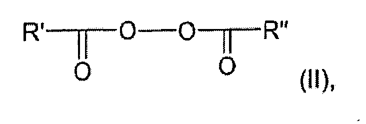 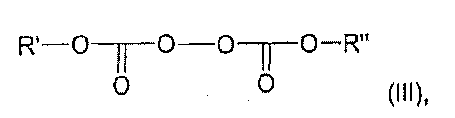
und 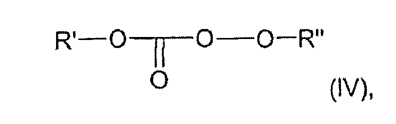 in denen die Gruppen R' und R", die gleich oder verschieden sind, Gruppen lineares oder verzweigtes Alkyl, Aryl oder Aralkyl, die gegebenenfalls substituiert sind, darstellen.

6. Verfahren nach Anspruch 5, **dadurch gekennzeichnet, dass** die eingesetzte Quelle (B) von freien Radikalen ein Peroxid umfasst, das ausgewählt ist aus: Diisobutyrylperoxid, Cumylperoxyneodecanoat, ter-Amylperoxyneodecanoat, Di(2-ethylhexyl)peroxydicarbonat, tert-Butylperoxyneodecanoat, Dibutylperoxydicarbonat, Dicetylperoxydicarbonat, Dimyristylperoxydicarbonat, tert-Butylperoxyneoheptanoat, tert-Amylperoxypivalat, Didecanoylperoxid, tert-Amylperoxy-2-ethylhexanoat, tert-Butylperoxyisobutyrat, 1,4-di(tert-Butylperoxycarbo)-cyclohexan, tert-Butylperoxyacetat, tert-Butylperoxybenzoat, Di-tert-amylperoxid, tert-Butylcumylperoxid, bis-Tertiobutylperoxid, Dicumylperoxid, Dilauroylperoxid und Di(4-tert-butylcyclohexyl)peroxydicarbonat.

7. Verfahren nach einem der Ansprüche 1 bis 6, **dadurch gekennzeichnet, dass** die Quelle von freien Radikalen (B) in einer solchen Menge eingeführt wird, dass die Menge an freien Radikalen, die sie freisetzen kann, zwischen 50 und 200 mol-% bezüglich der Gesamtmolmenge von Dithiocarbonyl- oder Dithiophosphorylfunktionen beträgt, die von der Gesamtheit der eingesetzten lebenden organischen Polymere (A) getragen werden.

8. Verfahren nach einem der Ansprüche 1 bis 7, **dadurch gekennzeichnet, dass** die einen labilen Wasserstoff tragende organische Verbindung (C) ausgewählt ist aus:
- den sekundären Alkoholen der Formel (HO)CH(R^{I})(R^{II}),
- den Mercaptanen der Formel R^{III}SH,
- den Phosphiten der Formel (O=)PH(-OR^{IV}) (-OR^{V}),
- den Silanen der Formel R^{VI}R^{VII}R^{VIII}SiH,
oder
- den Acetalen der Formel R^{IX}CH (OR^{X}) (OR^{XI}), in denen die Gruppen R^{I}, R^{II}, R^{III}, R^{IV}, R^{V}, R^{VI}, R^{VII}, R^{VIII}, R^{IX}, R^{X}, R^{XI} jeweils unabhängig voneinander einen der Reste Alkyl, Cycloalkyl, Alkoxy, Alkenyl, Acyl, Aryl, Aralkyl, Aralkenyl oder Aralkinyl darstellen, wobei diese Reste gegebenenfalls substituiert sein können.

9. Verfahren nach einem der Ansprüche 1 bis 8, **dadurch gekennzeichnet, dass** die Verbindung (C) in einer Menge von 1 bis 50000 Moläquivalenten und vorzugsweise 2 bis 10000 Moläquivalenten, bezogen auf das Polymer (A), eingesetzt wird.

10. Verfahren nach einem der Ansprüche 1 bis 9, **dadurch gekennzeichnet, dass** der Schritt des In-Kontakt-Bringens des lebenden Polymers (A), der Quelle von freien Radikalen (B) und der den labilen Wasserstoff tragenden organischen Verbindung (C) bei einer Temperatur zwischen 0°C und +200°C durchgeführt wird.
